# FASCICULE DE BREVET EUROPEEN

(11) **EP 0 864 051 B1**
(45) Date de publication et mention de la délivrance du brevet: **30.01.2002**
(21) Numéro de dépôt: 97943029.5
(22) Date de dépôt: 30.09.1997
(51) Int. Cl.: F16D 25/08

(54) **RECEPTEUR D'UNE COMMANDE HYDRAULIQUE D'EMBRAYAGE, NOTAMMENT DE VEHICULE AUTOMOBILE**
NEHMERZYLINDER FÜR DIE HYDRAULISCHE BETÄTIGUNG EINER KRAFTFAHRZEUGKUPPLUNG
HYDRAULIC CLUTCH CONTROL ACTUATOR, IN PARTICULAR OF MOTOR VEHICLE

(30) Priorité: 30.09.1996 FR 9611888
(43) Date de publication de la demande: 16.09.1998
(73) Titulaire: VALEO, 75017 Paris (FR)
(72) Inventeur: THOMIRE, Sylvain, F-92300 Levallois (FR); REY, Frédéric, F-95210 Saint-Gratien (FR)
(74) Mandataire: Gamonal, Didier
(86) Numéro de dépôt international: FR9701725
(87) Numéro de publication internationale: WO9814713

(56) Documents cités:
- EP-A- 0 168 932
- WO-A-96/24782
- FR-A- 2 695 685
- GB-A- 2 287 295

## Description

La présente invention concerne les commandes hydrauliques d'embrayage, notamment pour véhicules automobiles.

Elles se rapportent plus particulièrement au récepteur d'une telle commande.

Ainsi qu'on le sait, le récepteur, dit également actuateur, d'une ' telle commande comporte deux parties en relation de cylindre-piston, à savoir une première partie, dite fixe, pour fixation de la commande sur une structure fixe telle que le carter d'une boîte de vitesses, et une seconde partie, dite partie mobile, consistant usuellement en un piston coulissant axialement en étant monté à l'intérieur d'une cavité borgne définie par la partie fixe de forme creuse.

Cette cavité est propre à être pressurisée et dépressurisée.

Il est ainsi défini avec le piston une chambre à volume variable.

Pour ce faire, la partie fixe comporte une entrée d'alimentation reliée à la cavité.

Le fluide de commande peut être de nature gazeuse, telle que de l'air comprimé, ou de nature liquide, telle que de l'huile, la commande étant appelée, d'une manière générale, commande hydraulique.

L'entrée d'alimentation est reliée par un conduit à l'émetteur de la commande. Cet émetteur est actionné par la pédale de débrayage ou, de manière connue, par un actionneur doté par exemple d'un moteur électrique actionnant, par l'intermédiaire d'une transmission mécanique, le piston de l'émetteur.

Le moteur électrique est piloté par un calculateur recevant des informations provenant de capteurs associés notamment au levier de changement de vitesses et aux arbres menant et mené afin de mesurer la vitesse de rotation de ceux-ci.

La partie fixe du récepteur comporte, par exemple, des oreilles pour sa fixation à une partie fixe telle que le carter de la boîte de vitesses.

Pour plus de précisions on se reportera au document WO 96/24781.

En variante la partie fixe comporte au moins un corps extérieur, une semelle propre à être fixée sur le carter de la boîte de vitesses et des moyens de montage du type baïonnette intervenant entre le corps extérieur et la semelle avantageusement métallique.

Ainsi le corps extérieur peut être standardisé, tandis que la semelle sert d'adaptateur et est conformée en fonction des applications, plus précisément en fonction de la forme de la partie fixe sur laquelle elle se fixe.

Un tel montage est décrit par exemple dans le document FR-96 02571 déposé le 26 février 1996.

Dans ces deux documents la cavité est délimitée par un corps extérieur en matière moulable, et par un tube interne concentrique.

Les pièces sont agencées de manière coaxiale et concentrique.

Le tube est métallique et forme un organe de support et de guidage pour le piston actionnant la butée de débrayage de l'embrayage.

Pour mieux expliquer cela on se reportera à la figure 1 correspondant à la figure 2 du document WO-A-96/24781.

Ainsi on voit en 1 un embrayage classique du type poussé dans lequel le dispositif débrayeur est constitué par les doigts d'un diaphragme 13 sur l'extrémité interne desquels agit une butée de débrayage 3 appartenant ici au récepteur 2 de la commande hydraulique d'embrayage.

En variante le dispositif débrayeur de l'embrayage peut consister en des leviers de débrayage agissant sur des ressorts montés entre le couvercle 14 et le plateau de pression 12 de l'embrayage. Des ressorts d'assistance peuvent être prévus. Ces ressorts peuvent agir en série ou en parallèle avec le diaphragme. Un montage en série est décrit par exemple dans le document FR-97 11058 déposé le 5 septembre 1997, l'embrayage pouvant être alors équipé d'un dispositif de rattrapage d'usure pour compenser l'usure des garnitures de friction 16 du disque 11.

Dans cette figure, à titre d'exemple, le diaphragme 13 est monté pivotant sur le couvercle à l'aide de colonnettes 20.

Par sa partie rondelle Belleville le diaphragme 13 agit sur le plateau de pression 12 pour serrer les garnitures de friction 16 du disque de friction 11 entre les plateaux de pression 12 et de réaction 10 de l'embrayage.

S'agissant d'une application à un véhicule automobile, le couple est ainsi transmis du vilebrequin (non visible) du moteur du véhicule, sur lequel se fixe à l'aide de vis le plateau de réaction 10, à l'arbre d'entrée de la boîte de vitesses (non visible) sur lequel est monté le moyeu 17 à cannelures internes du disque de friction 11.

L'embrayage est alors engagé, le piston 4 étant rentré au maximum dans la cavité 50 définie par le corps fixe 5,6, ici en deux parties coaxiales et concentriques, à savoir le corps extérieur 5 en matière moulable, par exemple à base d'aluminium, et le tube interne 6 métallique entouré par le corps 5.

On voit en 56 l'entrée d'alimentation venue de moulage avec le corps 5, ici de forme tubulaire, et en 58 le conduit venant de l'émetteur de la commande hydraulique.

Cette entrée d'alimentation 56 est dotée intérieurement d'un canal débouchant dans le fond de la cavité 50, le piston 4 présentant à son extrémité arrière un joint 45 pour rendre étanche la cavité 50. Le volume de la chambre de commande est alors minimum.

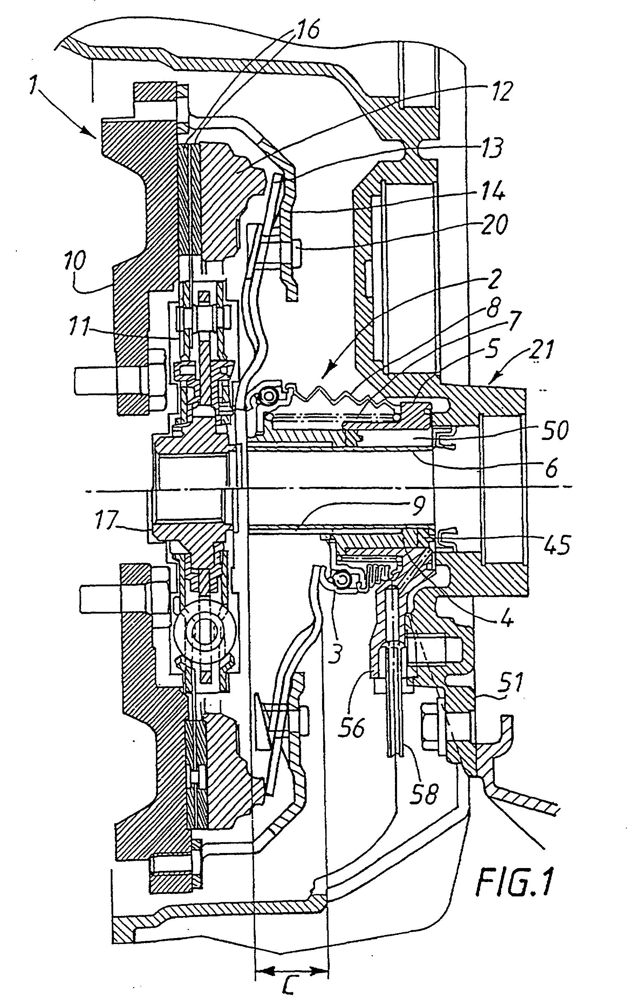

Lorsque l'on pressurise la cavité 50 à l'aide du fluide commande venant de l'émetteur précité, via le conduit 58 et l'entrée 56, le piston 4 est admis à se déplacer vers la gauche de la figure 1, en sorte que le volume de la chambre de commande augmente.

Le diaphragme 13 pivote grâce aux colonnettes 20, en sorte que son action de serrage sur le plateau de pression 12 diminue progressivement.

Au bout d'un déplacement C, dit course de débrayage, du piston 4 et de la butée de débrayage 3, portée ici par le piston 4, le diaphragme 13 n'exerce plus d'action sur le plateau de pression 12. Des languettes tangentielles (non visibles) rappellent alors le plateau de pression en direction du fond du couvercle 14 fixé ici par des vis non visibles sur le plateau de réaction 10.

L'embrayage est alors désengagé ; un jeu axial (non représenté) existant entre les garnitures de friction 16 et le plateau de pression 12. Le couple n'est alors plus transmis de l'arbre menant (le vilebrequin du moteur) à l'arbre mené (l'arbre d'entrée de la boîte de vitesses).

Pour mémoire on rappellera que les languettes tangentielles précitées assurent une liaison en rotation, avec mobilité axiale, entre le couvercle 14 et le plateau de pression 12.

Le volume de la chambre de commande est alors maximum, le piston 4 occupant une position de sortie (partie haute de la figure 1).

En dépressurisant la cavité 50 le piston 4 retourne, sous l'action du diaphragme 13, à sa position initiale rentrée (partie basse de la figure 1).

La butée de débrayage forme l'élément d'attaque agissant en poussant sur le dispositif débrayeur (le diaphragme 13) de l'embrayage et consiste, ici, en un roulement à billes dont la bague tournante est en contact, dans ce cas, en permanence avec le diaphragme 13 grâce à un ressort de précharge 7 agissant entre le corps 5 et le piston 4.

Ce ressort 7 est protégé par un soufflet 8 entourant le ressort 7.

Comme on le voit, le tube interne 6 est plus long axialement que le corps externe 5 en étant de faible épaisseur, ce qui permet de réduire l'encombrement radial.

Le corps 5 présente une partie avant tubulaire de faible épaisseur permettant de guider le ressort 7 et une partie arrière plus épaisse en forme de collerette.

L'entrée 56 se raccorde à la collerette dont la face avant sert d'appui au ressort 7 dont l'autre extrémité est en appui sur un flasque transversal que présente le piston 4 à son extrémité avant. Ce flasque transversal sert d'appui à la bague non tournante de la butée 3, le soufflet 8 étant accroché sur ladite bague et coincé par une pièce au contact de la face transversale avant de la collerette du corps 5.

Un manchon de guidage 9, porté par le tube 6, permet le guidage du piston 4 de forme tubulaire tout comme la cavité 50 d'orientation axiale.

Bien entendu, la présence du manchon 9 n'est pas obligatoire, comme visible dans le document FR-96 02571 précité, le piston 4 pouvant être en matière plastique ou comporter des bagues pour son coulissement le long du tube 6.

Dans tous les cas, le tube 6 porte avantageusement une butée d'arrêt, telle que le manchon 9 ou un jonc, pour limiter le déplacement du piston 4.

Il est possible de former par avance un sous-ensemble car le tube présente un flasque, globalement d'orientation transversale, à son extrémité arrière. Ce flasque, de forme annulaire, ferme la cavité 50 et forme le fond de celle-ci.

Le flasque est en contact avec une face transversale d'appui ménagée dans la face arrière de la collerette du corps extérieur 5 entourant le tube interne 6.

Un joint d'étanchéité est prévu à ce niveau pour rendre étanche la cavité 50.

La face transversale d'appui délimité une creusure (une entaille) à l'arrière du corps 5.

Ainsi, avant montage du récepteur 2 sur le carter 21 de la boîte de vitesses, le ressort 7 maintient le flasque du tube métallique 6 en contact avec le-corps extérieur 5, présentant des oreilles, dont l'une et visible en 51 dans la partie basse de la figure 1, pour sa fixation au carter de la boite de vitesses, par exemple à l'aide de vis.

Le récepteur 2 est ici du type concentrique car l'arbre d'entrée de la boîte de vitesses traverse le tube interne 6. La creusure est également délimitée par une portée de centrage pour le flasque du tube, cette partie centrant ledit flasque.

Après fixation du corps 5 sur le carter 21, le flasque du tube interne 6 est pincé entre le carter 21 et la face arrière de la collerette du corps extérieur.

Cette disposition nécessite de configurer le carter 21 afin que celui-ci offre une face d'appui au flasque du tube interne 6.

Compte tenu de la forme du carter, cela n'est pas toujours possible.

En outre, cela implique de respecter des tolérances précises entre le carter et l'arrière du corps extérieur afin que le flasque soit bien pincé.

Ces tolérances tiennent compte du fait que le corps extérieur est fixé directement sur le carter, par exemple à l'aide d'oreilles, ou indirectement à l'aide, par exemple, d'une semelle.

La présente invention a pour objet de pallier, de manière simple et économique, ces inconvénients, tout en ayant un maintien robuste du flasque malgré les variations de pression dans la cavité.

Suivant l'invention, un récepteur du type sus-indiqué dans lequel le corps extérieur est entaillé à son extrémité arrière pour montage du flasque du tube interne et formation d'une face transversale d'appui et d'une portée de centrage annulaire d'orientation axiale appartenant à une surépaisseur d'orientation axiale que présente le corps radialement au-delà de sa face transversale d'appui, est caractérisé en ce que la surépaisseur est prolongée axialement pour montage d'une pièce intermédiaire, en ce que la pièce intermédiaire est montée au contact de la face dudit flasque tournée à l'opposé de la face transversale d'appui du corps extérieur, et en ce que la surépaisseur est déformée pour créer un épaulement transversal de butée venant en contact avec la partie supérieure de la pièce intermédiaire pour emprisonner, à serrage, le flasque et la pièce intermédiaire entre la face transversale arrière d'appui du corps extérieur et ledit épaulement.

Grâce à l'invention, le flasque est assemblé par sertissage au corps extérieur avec intervention de la pièce intermédiaire permettant d'augmenter l'inertie de flexion du système corps extérieur-tube interne, du fait que la pièce intermédiaire fait saillie radialement vers l'intérieur par rapport à l'épaulement d'appui, et ce sans augmenter outre mesure l'encombrement, notamment axial.

Avantageusement, la surépaisseur présente un affaiblisse-ment pour réaliser le sertissage.

Il peut s'agir, par exemple, d'un anneau, d'orientation axiale, saillant, que l'on écrase axialement pour réaliser le sertissage.

Cette pièce intermédiaire accolée au flasque limite ainsi les déformations de celui-ci, ainsi que celles du corps extérieur.

La pièce intermédiaire a une forme annulaire.

Toutes ces dispositions sont favorables car cela permet d'augmenter le rendement de la commande en augmentant sa rigidité au niveau du fond de la cavité.

En outre, on limite les contraintes au niveau de la périphérie externe du flasque du tube interne et de la surépaisseur du corps extérieur dotée avantageusement d'une portée de centrage pour le flasque et la pièce intermédiaire.

Grâce à la pièce intermédiaire, le sertissage a une bonne tenue mécanique et résiste bien aux variations de pression dans la cavité, ainsi que le flasque soutenu par la pièce intermédiaire, en sorte que la durée de vie du récepteur est augmentée et que ce récepteur est plus fiable. Le flasque est donc maintenu fermement.

Une gorge annulaire peut être ménagée dans la face transversale d'appui. Cette gorge communique avec le canal interne de l'entrée d'alimentation. Des passages sont ménagés dans l'extrémité arrière du corps extérieur pour communication avec la cavité.

Tout ceci est possible grâce à la résistance mécanique accrue du sertissage servant également avantageusement à écraser un joint d'étanchéité.

La diminution des contraintes internes favorise un montage du type baïonnette sur une semelle de fixation, ledit corps présentant des passages pour des pattes de fixation issues de la semelle, avec rotation relative des pattes par rapport aux passages pour fixation du corps sur la semelle. Les passages peuvent être ainsi proches du flasque.

Grâce à l'invention, le flasque n'a pas besoin d'être pincé entre le carter le corps extérieur, en sorte que les tolérances de fabrication à respecter sont plus faciles à réaliser au bénéfice d'une réduction des coûts.

On bénéficie d'un bon rendement pour la commande tout en ayant un sertissage robuste et peu encombrant axialement.

La pièce intermédiaire annulaire, formant tuteur pour le flasque, présente avantageusement au moins une protubérance radialement en dessous de l'épaulement de butée et de verrouillage du corps.

La protubérance augmente l'inertie de la pièce intermédiaire.

La pièce peut avoir un profil en équerre.

En variante, elle peut avoir un profil en T ou en S.

Avantageusement cette protubérance consiste en un portion repliée permettant d'augmenter au maximum l'inertie tout en étant peu encombrante.

Plus précisément, cette disposition permet d'occuper au maximum la place disponible.

La pièce intermédiaire est donc en forme de cornière, en forme de L, de S ou de L avec un repli.

Grâce aux protubérances précitées, on augmente la rigidité de la pièce intermédiaire, ce qui permet de diminuer encore les déformations du flasque et de la surépaisseur du corps extérieure, ainsi que les contraintes.

Compte tenu de la présence de la pièce intermédiaire, on emboutit le flasque au niveau de sa racine avec la partie principale du tube.

Dans une forme de réalisation, le tube présente, à son extrémité arrière en section, une zone arrondie se raccordant à une partie inclinée prolongée par une partie transversale sertie selon l'invention.

On rigidifie ainsi au maximum le flasque en combinaison avec la présence de la pièce intermédiaire.

La surépaisseur sert au centrage du flasque.

Le joint, associé à l'arbre d'entrée de la boîte de vitesses, peut avoir une forme appropriée compte tenu que le flasque n'est pas en contact avec la partie fixe.

La description qui va suivre illustre l'invention en regard des dessins annexés dans lesquels :
- la figure 1 est une vue en coupe axiale d'un embrayage à diaphragme et à récepteur de commande hydraulique de l'art antérieur ;
- la figure 2 et une vue en coupe axiale partielle montrant le corps extérieur et le tube interne du récepteur avant le sertissage selon l'invention ;
- la figure 3 est une vue identique à la figure 2 après l'opération de sertissage ;
- la figure 4 est une vue partielle analogue à la figure 3 montrant le canal d'alimentation de la gorge d'alimentation de la cavité du récepteur ;
- les figures 5 et 6 sont des vues analogues à la figure 3 pour d'autres exemples de réalisation.

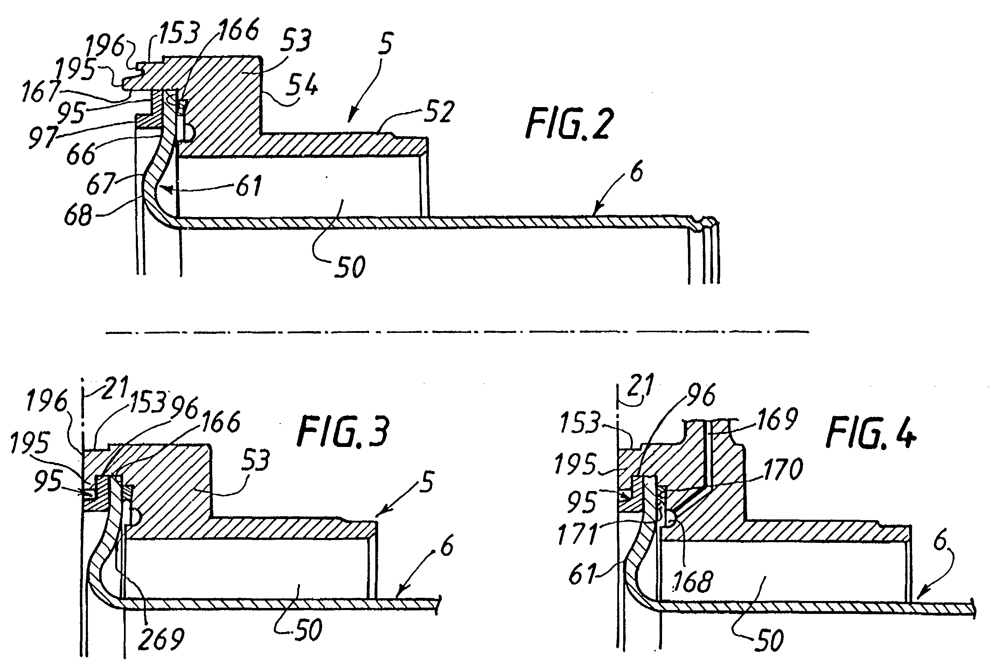

Pour plus de simplicité, les éléments communs à l'invention et à ceux du document WO-A-96/24781 seront affectés des mêmes références dans les figures 2 à 6.

Dans ces figures, on n'a pas représenté le soufflet 8, le ressort de précharge 7 et le piston de la figure 1 pour plus de clarté, l'important étant la zone de sertissage entre le corps extérieur 5, de forme globalement tubulaire, et le tube interne concentrique 6.

Le corps extérieur 5 a la même forme que celui de la figure 1 et comporte donc des oreilles, non visibles dans ces figures, pour sa fixation au carter 21 (représenté par sa trace) de la boîte de vitesses.

Ce corps 5 est en matière moulable, ici à base d'aluminium, et comporte donc une partie avant tubulaire 52 saillante axialement par rapport à la partie arrière 53 plus épaisse en forme de collerette saillante radialement par rapport à la partie avant 52 et ce vers l'extérieur.

On voit, en 54, la face avant de cette collerette servant d'appui au ressort de précharge centré par la partie avant 52.

Le tube 6 et le corps 5 sont agencés de manière coaxiale et concentrique pour définir la cavité 50 borgne de forme annulaire et d'orientation axiale. Le corps 5 entoure le tube 6.

C'est à l'intérieur de cette cavité fixe que coulisse le piston de la figure 1, guidé par le tube intérieur 6 plus long axialement que le corps 5 et doté, à son extrémité, d'une gorge pour montage d'un jonc (non visible) constituant une butée d'arrêt pour le piston portant la butée de débrayage.

L'extrémité arrière de la collerette 53 et donc du corps 5 est entaillée pour formation d'une creusure en forme de lamage.

Le corps 5 est donc entaillé à son extrémité arrière pour formation d'une face transversale d'appui 166 et d'une portée annulaire de centrage 167 s'étendant à la périphérie externe de la face d'appui 166.

La portée de centrage 167 est d'orientation axiale et appartient à une surépaisseur 153 d'orientation axiale.

Cette surépaisseur 153 est en forme de jupe 153 dont la périphérie interne (l'alésage interne) est constituée par la portée de centrage 167.

La surépaisseur 153 s'étend radialement au-dessus de la face d'appui 166.

Le tube interne 6 présente, à son extrémité arrière, un flasque 61 globalement d'orientation transversale monté dans l'entaille arrière du corps extérieur 5.

Le flasque 61 est de forme annulaire et est en contact par sa partie périphérique externe 66, d'orientation transversale, avec la face d'appui 166 du corps 5. Il est en contact intime par sa tranche périphérique externe avec la portée de centrage 167.

Suivant une caractéristique de l'invention, la surépaisseur 153 est prolongée axialement pour montage d'une pièce intermédiaire 95.

Cette pièce 95 est accolée au flasque 61 en étant en contact avec la partie périphérique externe 66 de celui-ci, plus précisément avec la face de celle-ci tournée à l'opposé de la face transversale d'appui 166.

La surépaisseur 153 est déformée (écrasée axialement) pour créer un épaulement transversale de butée 195 venant en contact (en prise) avec la partie supérieure 96 de la pièce intermédiaire 95 pour emprisonner à serrage le flasque 61 et la pièce intermédiaire 95 entre la face transversale arrière d'appui 166 du corps extérieur et ledit épaulement 195.

L'épaulement 195 est décalé axialement par rapport à la face d'appui 166 en étant en regard de celui-ci.

Le tube interne 6 est donc solidarisé par sertissage au corps extérieur 5 métallique grâce à la surépaisseur 153 d'orientation axiale.

Ainsi, à l'aide d'un outil, on fait fluer axialement et radialement la matière de la surépaisseur 153, et ce localement, pour formation de l'épaulement de butée 195, formant épaulement de verrouillage.

Avant l'opération de sertissage (figure 2) l'épaulement 195 est constitué par un anneau d'orientation axiale que présente la surépaisseur en saillie axiale.

A la figure 2 cet anneau s'étend axialement en saillie par rapport à une portée transversale de contact 196 que présente la surépaisseur 153 radialement au-dessus de l'épaulement 195.

Cette portée 196 est destinée à venir en contact avec le carter 21 (la partie fixe) dont on n'a représenté que la trace à la figure 3.

Après sertissage, la matière de la surépaisseur 153 de l'anneau ici fractionné est rabattue radialement, par fluage, vers l'intérieur pour formation de l'épaulement 195 décalé axialement par rapport à la face d'appui 166 en étant en vis-à-vis de celle-ci.

On notera que cette opération est aisée à réaliser car la face avant 54 de la collerette 53 sert d'appui à un contre-outil fixe par rapport à l'outil mobile axialement et écrasant la matière formant l'épaulement 195. Bien entendu, le corps 5 est métallique pour permettre un fluage de matière et donc le sertissage.

La pièce intermédiaire 95 a une forme annulaire. Elle s'étend radialement en dessous de l'épaulement 195 et vient augmenter l'épaisseur du flasque 61, plus précisément de la partie périphérique 66 du flasque 61.

Cette pièce 95 peut consister en une simple rondelle. Elle est, d'une manière générale, de forme annulaire en étant métallique.

Ici la pièce 95 a, en section, une forme d'équerre et présente, à sa périphérie interne, un anneau de rigidification 97 d'orientation axiale dirigée vers le carter 21.

On notera que l'épaulement 195 et l'anneau 97 sont légèrement en retrait axialement par rapport au carter 21 pour ne pas interférer avec celui-ci.

L'anneau 97 constitue une protubérance implantée radialement en dessous de l'épaulement de butée 195. Cet anneau peut être fractionné en secteurs annulaires.

Le flasque 61 a une forme particulière pour augmenter sa rigidité en combinaison avec la présence de la pièce intermédiaire 95 métallique. La partie périphérique externe 66, en forme de rondelle, est raccordée à une partie annulaire inclinée 67 en direction opposée à la face d'appui 166, elle-même raccordée à une zone annulaire arrondie 68, ici globalement sur 90° en section. Ainsi, la partie 67 est de forme tronconique et la zone 68 de forme torique; car le flasque 61 est de forme annulaire.

La zone arrondie 68 est légèrement en retrait par rapport au carter 21 pour ne pas interférer avec celui-ci.

Cette zone 68 se raccorde à la partie principale tubulaire du tube interne 6.

La pièce intermédiaire 95 est en contact avec la face de la partie périphérique 66 du flasque 61 tournée à l'opposé de la face transversale d'appui 166.

Tout ceci permet d'occuper au maximum la place disponible à l'arrière du corps extérieur 5 à la faveur de l'entaille arrière de celui-ci, tout en rigidifiant au maximum le flasque et en diminuant les contraintes au niveau de la surépaisseur 153 du corps 5 et de la partie périphérique 66 du flasque 61.

L'épaulement 195 ne s'ouvrira pas ainsi en fonctionnement grâce à la pièce intermédiaire 95 avantageusement métallique.

Cette pièce 95 et le flasque 61 sont centrés par la portée de centrage 167.

Grâce à toutes ces dispositions, le rendement de la commande hydraulique est augmenté et la face transversale d'appui 166 peut être affectée par une gorge annulaire d'alimentation 168 de la cavité 50. Cette gorge 168 est en communication avec le canal 169 de l'entrée d'alimentation. La gorge 168 est en regard de la partie 66 du flasque 6. Elle s'étend radialement en dessous de la protubérance 67 de la pièce intermédiaire.

La face d'appui 166 s'étend radialement en dessous de la partie périphérique 66 du flasque 61 et présente un dégagement 269 globalement d'orientation transversale pour passage du fluide de commande venant de la gorge 168. Ce fluide, ici par exemple de l'huile, s'écoule ainsi dans la cavité 50, son écoulement étant facilité par la partie inclinée 67 et la zone arrondie 68 du flasque 61

La gorge est élargie radialement vers l'extérieur pour formation d'un logement 170 de montage d'un joint d'étanchéité 171 s'étendant radialement au-delà de la gorge 186 proprement dite.

Ce joint 171 est écrasé par la partie périphérique 66 du flasque 61.

La face d'appui 166 est donc en contact ici avec le flasque 61 par une zone périphérique externe s'étendant radialement au-dessus du joint 171 en regard de l'épaulement 195.

Bien entendu, en variante, la face d'appui 166 peut être en contact intérieurement avec la périphérie externe 66 du flasque 61.

Dans ce cas, il faut réaliser des rainures, transversales par exemple, au niveau de la périphérie interne de la face d'appui 166 pour communication de la gorge 168 avec la cavité 50.

Bien entendu, on peut modifier la pièce intermédiaire 95, plus précisément la forme de celle-ci, radialement en dessous de l'épaulement 195.

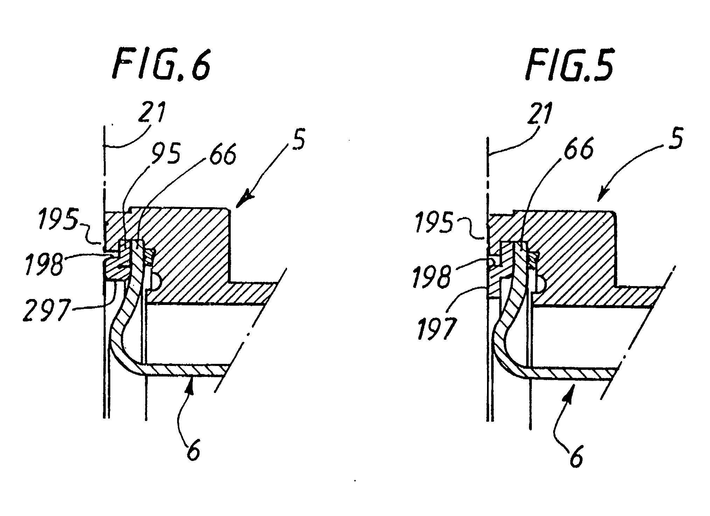

Ainsi, à la figure 5, la pièce intermédiaire 95 présente, à sa périphérie interne, une protubérance annulaire d'orientation transversale 197 dirigée radialement vers l'intérieur.

Cette protubérance est reliée par une partie annulaire d'orientation axiale 198 à la partie principale de la pièce intermédiaire annulaire qui a ainsi en section, globalement, la forme du S.

Ceci permet d'augmenter la masse et donc l'inertie de la pièce intermédiaire 95 par rapport à celle de la figure 1, tout en évitant tout contact avec le carter 21.

En variante, figure 6, on peut replier la matière de la partie transversale 197 de la figure 5 pour augmenter encore l'inertie et la rigidité de la pièce intermédiaire 95, sa protubérance consistant, dans ce cas, en une partie repliée 297 à partir de la partie annulaire d'orientation axiale 198.

La partie repliée 197 est en contact avec la partie 198.

Bien entendu, l'épaulement 195 peut être de forme annulaire continue, mais grâce à l'invention, il peut être fragmenté en secteurs annulaires du fait de la présence de la pièce intermédiaire 95 ayant une fonction de rigidification.

Le sertissage est ainsi plus facile à réaliser et plus précis tout en ayant un bon serrage axial du flasque 61 et de la pièce 95 entre la face d'appui 166 et l'épaulement 195.

Ce serrage axial est suffisant dans tous les cas pour lier en rotation le flasque 61 et de la pièce 95 entre la face d'appui 166 et l'épaulement 195, et donc au corps extérieur 5.

Bien entendu, la présente invention n'est pas limitée aux exemples de réalisation décrits.

En particulier, la localisation de la portée 196 d'appui sur le carter dépend des applications.

La pièce intermédiaire peut avoir, en section, une forme de T.

La protubérance peut être fractionnée.

Le corps 5 peut ne pas s'appuyer sur le carter, mais sur une semelle portée par celui-ci.

On notera que, dans les figures 5 et 6, la gorge s'étend au moins en partie radialement au niveau des protubérances.

La portée de centrage 167 de la surépaisseur 153 permet de centrer le flasque 61 du tube interne et la pièce intermédiaire 95 en étant en contact intime avec la tranche périphérique externe de ceux-ci.

Dans tous les cas, on affaiblit la surépaisseur 153 localement pour réaliser l'épaulement 195 de manière aisée et précise. Ici ceci est réalisé à l'aide, par exemple, d'un anneau saillant axialement séparé de la portée 196 par une saignée. L'anneau est ici avantageusement fractionné en secteurs.

On peut envisager d'autres formes de réalisation.

## Revendications

1. Récepteur de commande hydraulique d'embrayage comportant deux pièces coaxiales (5,6) agencées concentriquement pour définir une cavité (50) annulaire borgne propre à être alimentée par un fluide de commande, l'une desdites pièces consistant en un corps extérieur (5) entaillé à son extrémité arrière pour formation d'une face transversale d'appui (166), dite face d'appui, et d'une portée de centrage (167), tandis que l'autre desdites parties consiste en un tube interne de support et de guidage (6) pour un piston (4) monté coulissant axialement dans ladite cavité (50), dans lequel le tube interne (6) présente, à son extrémité arrière, un flasque (61) globalement d'orientation transversale en contact avec la face d'appui (166) et avec la portée de centrage (167) de forme annulaire et d'orientation axiale appartenant à une surépaisseur (153) d'orientation axiale s'étendant radialement au-dessus de la face d'appui (166), **caractérisé en ce que** la surépaisseur (153) est prolongée axialement pour montage d'une pièce intermédiaire (95), **en ce que** la pièce intermédiaire (95) est en contact avec la face dudit flasque (61) tournée à l'opposé de la face d'appui (166), et **en ce que** la surépaisseur (153) est déformée pour créer un épaulement transversal de butée (195) venant en contact avec la partie supérieure (96) de la pièce intermédiaire (95) pour emprisonner à serrage ledit flasque (61) et la pièce intermédiaire (95) entre la face d'appui (166) et l'épaulement de butée (195).

2. Récepteur selon la revendication 1, **caractérisé en ce que** la pièce intermédiaire (95) a une forme annulaire et présente une protubérance (97,197,297) radialement en dessous de l'épaulement de butée (195).

3. Récepteur selon la revendication 2, **caractérisé en ce que** la pièce intermédiaire (95) présente, à sa périphérie interne, un anneau de rigidification (97) d'orientation axiale, éventuellement fractionné.

4. Récepteur selon la revendication 2, **caractérisé en ce que** la pièce intermédiaire a globalement, à section, une forme de S.

5. Récepteur selon la revendication 4, **caractérisé en ce que** la pièce intermédiaire présente, à sa périphérie interne, une protubérance annulaire d'orientation transversale (197), dirigée radialement vers l'intérieur, et **en ce que** ladite protubérance est reliée par une partie annulaire d'orientation axiale (198) à la partie principale de la pièce intermédiaire (95).

6. Récepteur selon la revendication 2, **caractérisé en ce que** la pièce intermédiaire présente, à sa périphérie interne, une première partie annulaire d'orientation axiale (198) prolongée par une partie repliée au contact de la première partie.

7. Récepteur selon la revendication 1, **caractérisé en ce que** l'épaulement de butée (195) s'étend radialement en dessous d'une portée transversale de contact (196) du corps extérieur (5) pour contact du corps extérieur (5) avec un carter.

8. Récepteur selon la revendication 1, **caractérisé en ce que** le flasque (61) du tube intérieur (6) présente une partie périphérique (66) en forme de rondelle raccordée à une partie inclinée (167) en direction opposée à la face d'appui (166), elle-même raccordée à une zone annulaire arrondie (68) se raccordant elle-même à la partie principale du tube interne (6).

9. Récepteur selon la revendication 1, **caractérisé en ce que** la face d'appui (166) est affectée par une gorge d'alimentation (168) de la cavité.

10. Récepteur selon la revendication 1, **caractérisé en ce que** la portée de centrage (167) du corps externe (5) sert au centrage du flasque (61) du tube interne (6) et au centrage de la pièce intermédiaire (95).

11. Récepteur selon la revendication 1, **caractérisé en ce que** l'épaulement de butée (195) est formé à la faveur d'un anneau, éventuellement fractionné, d'orientation axiale que présente en saillie la surépaisseur (153).

## Patentansprüche

1. Nehmerzylinder einer hydraulischen Kupplungsbetätigung mit zwei koaxialen Teilen (5, 6), die konzentrisch angeordnet sind, um einen ringförmigen Blindhohlraum (50) zu definieren, dem ein Arbeitsmedium zugeleitet werden kann, wobei einer der besagten Teile aus einem Außenkörper (5) besteht, der an seinem hinteren Ende eingekerbt ist, um eine als Auflagefläche bezeichnete Querauflagefläche (166) und eine Zentriersitzfläche (167) zu bilden, während der andere der besagten Teile aus einem inneren Träger- und Führungsrohr (6) für einen Kolben (4) besteht, der axial verschiebbar in dem besagten Hohlraum (50) gelagert ist, wobei das Innenrohr (6) an seinem hinteren Ende einen insgesamt quer ausgerichteten Flansch (61) aufweist, der sich in Kontakt mit der Auflagefläche (166) und mit der ringförmigen und axial ausgerichteten Zentriersitzfläche (167) befindet, die zu einer axial ausgerichteten Erhebung (153) gehört, die sich radial oberhalb der Auflagefläche (166) erstreckt,
**dadurch gekennzeichnet,**
**daß** die Erhebung (153) für die Anbringung eines Zwischenstücks (95) axial verlängert ist, daß sich das Zwischenstück (95) in Kontakt mit der entgegengesetzt zur Querauflagefläche (166) gerichteten Fläche des besagten Flansches (61) befindet, und daß die Erhebung (153) verformt ist, um eine Queranschlagschulter (195) zu schaffen, die mit dem oberen Teil (96) des Zwischenstücks (95) in Kontakt kommt, um den Flansch (61) und das Zwischenstück (95) eingespannt zwischen der hinteren Querauflagefläche (166) und der besagten Schulter (195) zu sichern.

2. Nehmerzylinder nach Anspruch 1, **dadurch gekennzeichnet, daß** das Zwischenstück (95) eine Ringform hat und eine Ausstülpung (97, 197, 297) radial unterhalb der Anschlagschulter (195) aufweist.

3. Nehmerzylinder nach Anspruch 2, **dadurch gekennzeichnet, daß** das Zwischenstück (95) an seinem inneren Umfang einen, gegebenenfalls unterteilten, axial ausgerichteten Versteifungsring (97) aufweist.

4. Nehmerzylinder nach Anspruch 2, **dadurch gekennzeichnet, daß** das Zwischenstück insgesamt im Schnitt eine S-Form aufweist.

5. Nehmerzylinder nach Anspruch 4, **dadurch gekennzeichnet, daß** das Zwischenstück an seinem inneren .Umfang eine quer ausgerichtete ringförmige Ausstülpung (197) aufweist, die radial nach innen gerichtet ist, und daß die besagte Ausstülpung durch einen axial ausgerichteten ringförmigen Teil (198) mit dem Hauptteil des Zwischenstücks (95) verbunden ist.

6. Nehmerzylinder nach Anspruch 2, **dadurch gekennzeichnet, daß** das Zwischenstück an seinem inneren Umfang einen axial ausgerichteten ringförmigen Teil (198) aufweist, der durch einen in Kontakt mit dem ersten Teil umgebogenen Teil verlängert wird.

7. Nehmerzylinder nach Anspruch 1, **dadurch gekennzeichnet, daß** sich die Anschlagschulter (195) radial unterhalb einer quer angeordneten Kontaktsitzfläche (196) des Außenkörpers (5) für den Kontakt des Außenkörpers (5) mit einem Gehäuse aufweist.

8. Nehmerzylinder nach Anspruch 1, **dadurch gekennzeichnet, daß** der Flansch (61) des Innenrohrs (6) einen Umfangsteil (66) in Form einer Scheibe aufweist, die sich an einen in der zur Auflagefläche (166) entgegengesetzten Richtung geneigten Teil (167) anschließt, der seinerseits an einen abgerundeten ringförmigen Bereich (68) angeschlossen ist, der sich wiederum an den Hauptteil des Innenrohrs (6) anschließt.

9. Nehmerzylinder nach Anspruch 1, **dadurch gekennzeichnet, daß** in die Auflagefläche (166) eine Zuleitungsauskehlung (168) für den Hohlraum eingearbeitet ist.

10. Nehmerzylinder nach Anspruch 1, **dadurch gekennzeichnet, daß** die Zentriersitzfläche (167) des Außenkörpers (5) zur Zentrierung des Flansches (61) des Innenrohrs (6) und zur Zentrierung des Zwischenstücks (95) dient.

11. Nehmerzylinder nach Anspruch 1, **dadurch gekennzeichnet, daß** die Anschlagschulter (195) mittels eines, gegebenenfalls unterteilten, axial ausgerichteten Rings gebildet ist, den die Erhebung (153) vorstehend aufweist.

## Claims

1. An hydraulic control receiver for a clutch, comprising two coaxial members (5, 6) arranged concentrically so as to define a blind annular cavity (50) which is adapted to be supplied with a control fluid, one of the said members consisting of an external body (5) recessed at its rear end to define a transverse thrust face (166), referred to as the thrust face, and a centring surface (167), while the other one of the said members consists of an internal support and guide tube (6) for a piston (4) mounted for axial sliding movement in the said cavity (50), wherein the internal tube (6) has at its rear end a generally transversely oriented flange (61) in contact with the thrust face (166) and with the centring surface (167), the centring surface being of annular form and oriented axially, and being part of an axially oriented portion (153) of increased thickness extending radially ouitwards from the thrust face (166), **characterised in that** the portion (153) of ibcreased thickness is extended axially for mounting an intermediate member (95), **in that** the intermediate member (95) is in contact with the face of the said flange (61) that faces away from the thrust face (166), and **in that** the portion (153) of increased thickness is deformed so as to define a transverse abutment shoulder (195) which makes contact with the radially outermost portion (96) of the intermediate member (95) so as to trap and grip the said flange (61) and the intermediate member (95) between the thrust face (166) and the abutment shoulder (195).

2. A receiver according to Claim 1, **characterised in that** the intermediate mnember (95) is annular in form and has a projecting element (97, 197, 297) radially inwards of the abutment shoulder (195).

3. A receiver according to Claim 2, **characterised in that** the intermediate member (195) has at its inner periphery an axially oriented annular stiffening ring portion (97), which may be of divided form.

4. A receiver according to Claim 2, **characterised in that** the intermediate member has a generally S-shaped cross section.

5. A receiver according to Claim 4, **characterised in that** the intermediate member has at its inner periphery a transversely oriented annular projecting element (197) directed radially inwards, and **in that** the said projecting element is joined to the main part of the intermediate member (95) by an axially oriented annular portion (198).

6. A receiver according to Claim 2, **characterised in that** the intermediate member has at its inner periphery an axaially oriented annular first portion (198) extended by a bent-back portion in contact with the first portion.

7. A receiver according to Claim 1, **characterised in that** the abutment shoulder (195) lies radially inwards of a transverse contact surface (196) of the external body (5), for contact of the external body (5) with a casing.

8. A receiver according to Claim 1, **characterised in that** the flange (61) of the internal tube (6) has a peripheral portion (66) in the form of a ring joined to a portion (67) which is inclined away from the thrust face (166), and which is itself joined to a rounded annular zone (68), the latter being joined to the main portion of the internal tube (6).

9. A receiver according to Claim 1, **characterised in that** a feed groove (168) of the cavity is formed in the thrust face (166).

10. A receiver according to Claim 1, **characterised in that** the centring surface (167) of the external body (5) serves for centring the flange (61) of the internal tube (6) and for centring the intermediate member (95).

11. A receiver according to Claim 1, **characterised in that** the abutment shoulder (195) is formed in an axially oriented annular ring portion, which may be of divided form and which is a projecting part of the portion (153) of increased thickness.
